(19) Europäisches Patentamt
European Patent Office
Office européen des brevets

(11) **EP 4 495 809 A1**

(12) **EUROPEAN PATENT APPLICATION**
published in accordance with Art. 153(4) EPC

(43) Date of publication:
**22.01.2025 Bulletin 2025/04**

(21) Application number: **22932062.7**

(22) Date of filing: **16.03.2022**

(51) International Patent Classification (IPC):
*G06F 21/31* (2013.01)

(52) Cooperative Patent Classification (CPC):
**G06F 21/31**

(86) International application number:
**PCT/JP2022/011958**

(87) International publication number:
**WO 2023/175783 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **HASHIMOTO, Hiroshi**
  **Tokyo 108-8001 (JP)**
• **HAYASAKA, Akihiro**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **INFORMATION PROCESSING DEVICE, INFORMATION PROCESSING METHOD, AND RECORDING MEDIUM**

(57) An information processing apparatus includes: a feature quantity acquisition unit that acquires a query feature quantity regarding a target of authentication processing; a first score calculation unit that calculates a first score indicating a degree at which the query feature quantity matches a target feature quantity registered in advance; a second score calculation unit that calculates a second score indicating a degree at which the query feature quantity does not match the target feature quantity, on the basis of the first score; and a map generation unit that generates a saliency map regarding the authentication processing by treating the first score as a first-class score corresponding to a first class and treating the second score as a second-class score corresponding to a second class.

10: INFORMATION PROCESSING APPARATUS

FIG. 2

## Description

Technical Field

This disclosure relates to technical fields of an information processing apparatus, an information processing method, and a recording medium.

Background Art

A known apparatus of this type visually displays a contribution degree in an inference result. For example, Patent Literature 1 discloses that an activation map is generated by Grad-CAM processing from a feature map generated by a convolutional neural network.

As another related technology/technique, for example, Patent Literature 2 discloses that a weight representing a degree of influence on a target category in the feature map is outputted for each channel of the convolution layer and for each output position. Patent Literature 3 discloses that when a class of input data is identified, a feature vector extracted from input data is processed as a weight vector.

Citation List

Patent Literature

Patent Literature 1: JP2021-089512A
Patent Literature 2: JP2019-211913A
Patent Literature 3: JP2012-084117A

Summary

Technical Problem

This disclosure aims to improve the techniques/technologies disclosed in Citation List.

Solution to Problem

An information processing apparatus according to an example aspect of this disclosure includes: a feature quantity acquisition unit that acquires a query feature quantity regarding a target of authentication processing; a first score calculation unit that calculates a first score indicating a degree at which the query feature quantity matches a target feature quantity registered in advance; a second score calculation unit that calculates a second score indicating a degree at which the query feature quantity does not match the target feature quantity, on the basis of the first score; and a map generation unit that generates a saliency map regarding the authentication processing by treating the first score as a first-class score corresponding to a first class and treating the second score as a second-class score corresponding to a second class.

An information processing method according to an example aspect of this disclosure includes: acquiring a query feature quantity regarding a target of authentication processing; calculating a first score indicating a degree at which the query feature quantity matches a target feature quantity registered in advance; calculating a second score indicating a degree at which the query feature quantity does not match the target feature quantity, on the basis of the first score; and generating a saliency map regarding the authentication processing by treating the first score as a first-class score corresponding to a first class and treating the second score as a second-class score corresponding to a second class.

A recording medium according to an example aspect of this disclosure is a recording medium on which a computer program that allows at least one computer to execute an information processing method is recorded, the information processing method including: acquiring a query feature quantity regarding a target of authentication processing; calculating a first score indicating a degree at which the query feature quantity matches a target feature quantity registered in advance; calculating a second score indicating a degree at which the query feature quantity does not match the target feature quantity, on the basis of the first score; and generating a saliency map regarding the authentication processing by treating the first score as a first-class score corresponding to a first class and treating the second score as a second-class score corresponding to a second class.

Brief Description of Drawings

[FIG. 1] FIG. 1 is a block diagram illustrating a hardware configuration of an information processing apparatus according to a first example embodiment.

[FIG. 2] FIG. 2 is a block diagram illustrating a functional configuration of the information processing apparatus according to the first example embodiment.

[FIG. 3] FIG. 3 is a flowchart illustrating a flow of operation of the information processing apparatus according to the first example embodiment.

[FIG. 4] FIG. 4 is a block diagram illustrating a functional configuration of an information processing apparatus according to a second example embodiment.

[FIG. 5] FIG. 5 is a flowchart illustrating a flow of operation of the information processing apparatus according to the second example embodiment.

[FIG. 6] FIG. 6 is a schematic diagram illustrating an influence of normalization processing in gradient calculation.

[FIG. 7] FIG. 7 is a block diagram illustrating a functional configuration of a CAM generation unit in an information processing apparatus according to a third example embodiment.

[FIG. 8] FIG. 8 is a flowchart illustrating a flow of operation of the information processing apparatus according to the third example embodiment.

[FIG. 9] FIG. 9 is a conceptual diagram illustrating an example of a visualization method by an information processing apparatus according to a fourth example embodiment.

[FIG. 10] FIG. 10 is a block diagram illustrating a functional configuration of an information processing apparatus according to a fifth example embodiment.

[FIG. 11] FIG. 11 is a flowchart illustrating a flow of operation of the information processing apparatus according to the fifth example embodiment.

[FIG. 12] FIG. 12 is a conceptual diagram illustrating an example of a visualization method by an information processing apparatus according to a sixth example embodiment.

Description of Example Embodiments

Hereinafter, an information processing apparatus, an information processing method, and a recording medium according to example embodiments will be described with reference to the drawings.

<First Example Embodiment>

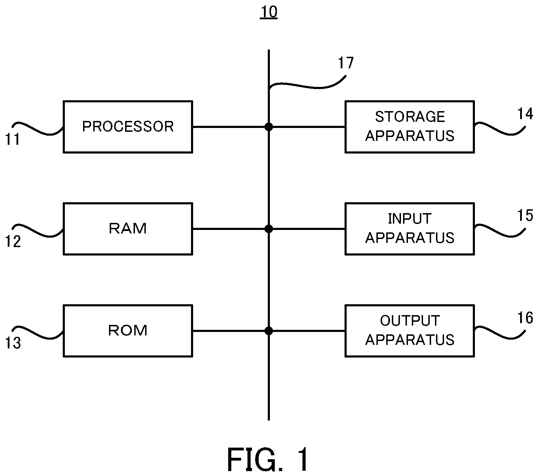

An information processing apparatus according to a first example embodiment will be described with reference to FIG. 1 to FIG. 3.

(Hardware Configuration)

First, with reference to FIG. 1, a hardware configuration of the information processing apparatus according to the first example embodiment will be described. FIG. 1 is a block diagram illustrating the hardware configuration of the information processing apparatus according to the first example embodiment.

As illustrated in FIG. 1, an information processing apparatus 10 according to the first example embodiment includes a processor 11, a RAM (Random Access Memory) 12, a ROM (Read Only Memory) 13, and a storage apparatus 14. The information processing apparatus 10 may further include an input apparatus 15 and an output apparatus 16. The processor 11, the RAM 12, the ROM 13, the storage apparatus 14, the input apparatus 15, and the output apparatus 16 are connected through a data bus 17.

The processor 11 reads a computer program. For example, the processor 11 is configured to read a computer program stored by at least one of the RAM 12, the ROM 13 and the storage apparatus 14. Alternatively, the processor 11 may read a computer program stored in a computer-readable recording medium, by using a not-illustrated recording medium reading apparatus. The processor 11 may acquire (i.e., may read) a computer program from a not-illustrated apparatus disposed outside the information processing apparatus 10, through a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for generating a saliency map is realized or implemented in the processor 11. In this manner, the processor 11 may function as a controller for executing each control in the information processing apparatus 10.

The processor 11 may be configured as, for example, a CPU (Central Processing Unit), a GPU (Graphics Processing Unit), a FPGA (Field-Programmable Gate Array), a DSP (Demand-Side Platform), or an ASIC (Application Specific Integrated Circuit). The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM12 may be, for example, a D-RAM (Dynamic Random Access Memory) or a SRAM (Static Random Access Memory). Furthermore, another type of volatile memory may also be used instead of the RAM12.

The ROM 13 stores the computer program to be executed by the processor 11. The ROM 13 may otherwise store fixed data. The ROM13 may be, for example, a P-ROM (Programmable Read Only Memory) or an EPROM (Erasable Read Only Memory). Furthermore, another type of non-volatile memory may also be used instead of the ROM13.

The storage apparatus 14 stores data that are stored by the information processing apparatus 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing apparatus 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the information processing apparatus 10 to the outside. For example, the output apparatus 16 may be a display apparatus (e.g., a display) that is configured to display the information about the information processing apparatus 10. The output apparatus 16 may be a speaker or the like that is configured to audio-output the information about the information processing apparatus 10. The output apparatus 16 may be configured as a portable terminal such as a smartphone and a tablet. The output apparatus 16 may be an apparatus that outputs information in a form other than an image. For example, the output apparatus 16 may be a speaker that audio-outputs the information about the information processing apparatus 10.

Although FIG. 1 illustrates an example of the information processing apparatus 10 including a plurality of apparatuses, all or a part of the functions may be realized or implemented as a single apparatus. In such a case, the information processing apparatus 10 may include only the processor 11, the RAM 12, and the ROM 13. The other components (i.e., the storage apparatus 14, the input apparatus 15, and the output apparatus 16) may be provided in an external apparatus connected to the information processing apparatus 10, for example. In addition, in the information processing apparatus 10, a part of an arithmetic function may be realized by an external apparatus (e.g., an external server or cloud, etc.).

(Functional Configuration)

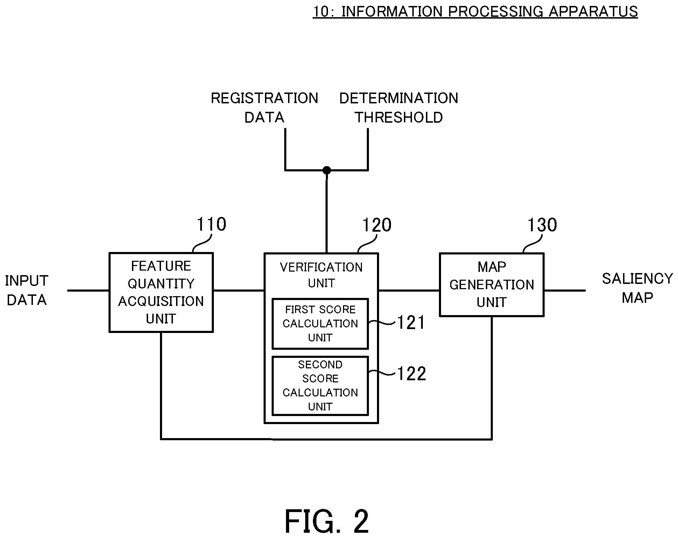

Next, a functional configuration of the information processing apparatus 10 according to the first example embodiment will be described with reference to FIG. 2. FIG. 2 is a block diagram illustrating the functional configuration of the information processing apparatus according to the first example embodiment.

The information processing apparatus 10 according to the first example embodiment is configured to generate a saliency map regarding authentication processing. For example, the information processing apparatus 10 is configured to generate a saliency map that visualizes a highly contributory part regarding the authentication processing. Although there is no particular limitation on a type of the authentication processing here, it may be biometric authentication processing using a face image or iris image, for example. The information processing apparatus 10 may be configured to perform the authentication processing, but may be configured not to perform the authentication processing (e.g., the authentication processing may be configured to be performed by an external apparatus).

As illustrated in FIG. 2, the information processing apparatus 10 according to the first example embodiment includes, as components for realizing the functions thereof, a feature quantity acquisition unit 110, a verification unit 120, and a map generation unit 130. Each of the feature quantity acquisition unit 110, the verification unit 120, and the map generation unit 130 may be a processing block realized or implemented by the processor 11 (see FIG. 1), for example. Each of the feature quantity acquisition unit 110, the verification unit 120, and the map generation unit 130 may be configured as a neural network.

The feature quantity acquisition unit 110 is configured to acquire a query feature quantity regarding a target of the authentication processing. For example, the feature quantity acquisition unit 110 may be configured to extract the query feature quantity by executing various types of processing on an image of the target. The feature quantity acquisition unit 110 is configured to output the acquired feature quantity to the verification unit 120. Furthermore, the feature quantity acquisition unit 110 may be configured to output information used for map generation (e.g., an intermediate feature quantity used for gradient calculation, etc.) to the map generation unit 130.

The verification unit 120 is configured to perform verification processing by using the query feature quantity acquired by the feature quantity acquisition unit 110 and a target feature quantity registered in advance. Specifically, the verification unit 120 calculates a matching score from the query feature quantity and the target feature quantity. In this case, the verification unit 120 performs the verification processing by comparing the calculated matching score with a determination threshold for determining that the score indicates a person in question (i.e., a registered target), and a determination threshold for determining that the score indicates another person (i.e., not a registered target). The matching score may be calculated as cosine similarity between the query feature quantity and the target feature quantity, for example.

The verification unit 120 includes, as components for calculating the matching score, a first score calculation unit 121 and a second score calculation unit 122. The first score calculation unit 121 is configured to calculate a first score (a so-called score for the person in question) indicating a degree at which the query feature quantity matches the target feature quantity. In a case where there are a plurality of registered targets, the first score may be calculated for each of the plurality of targets. That is, a plurality of first scores may be calculated. The second score 122 is configured to calculate a second score (a so-called score for another person) indicating a degree at which the query feature quantity does not match the target feature quantity.

The map generation unit 130 is configured to generate a saliency map by using the matching score calculated by the verification unit. Specifically, the map generation unit 130 treats a first score calculated in the first score calculation unit 121, as a first-class score corresponding to a first class. For example, the map generation part 130 may regard a first score $y^t$ expressed as in the following equation (1), as a first-class score $y^c$.

[Equation 1]

$$y^t = \vec{\hat{f}} \cdot \vec{\hat{f}}_t \cdots (1)$$

where f(hat) is the query feature quantity, f(hat)t is the t-th target feature quantity.

In addition, the map generation unit 130 treats a second score calculated in the second score calculation unit 122, as a second-class score corresponding to a second class (i.e., a class that is different from the first class). For example, from another person probability p represented as in the following equation (2), a second-class score x may be defined as in the following equation (3).

[Equation 2]

$$p = \frac{\exp(s\lambda)}{\sum_t \exp(sy^t) + \exp(s\lambda)} = \frac{1}{\sum_t \exp(s(y^t - \lambda)) + 1} = \frac{1}{\exp(-x) + 1} \cdots (2)$$

$$x = -\ln\left(\sum_t \exp(s(y^t - \lambda))\right) \cdots (3)$$

where $\lambda$ is the determination threshold for determining the person in question or another person, and s is a positive number (superparameter).

As described above, by treating the first score (score for the person in question) as the first-class score and treating the second score (score for another person) as the second-class score, it is possible to regard and process an authentication task whose class is not defined in advance, as a class separation task. When the second-class score is set constant (e.g., simply, a threshold), a gradient calculation result is all zero, and a desired result may not be obtained. The definition as described above, however, makes it possible to avoid such a problem.

(Flow of Operation)

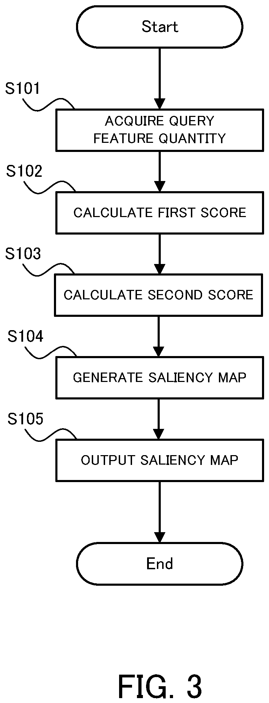

Next, with reference to FIG. 3, a flow of operation of the information processing apparatus 10 according to the first example embodiment (specifically, a flow until the saliency map is outputted) will be described. FIG. 3 is a flowchart illustrating the flow of the operation of the information processing apparatus according to the first example embodiment.

As illustrated in FIG. 3, when the operation by the information processing apparatus 10 according to the first example embodiment is started, first, the feature quantity acquisition unit 110 acquires the query feature quantity regarding the target of the authentication processing (step S101). The query feature quantity acquired by the feature quantity acquisition unit 110 is outputted to the verification unit 120. The intermediate feature quantity or the like acquired by the feature quantity acquisition unit 110 may be outputted to the map generation unit 130.

Subsequently, the first score calculation unit 121 in the verification unit 120 calculates the first score indicating the degree at which the query feature quantity matches the target feature quantity (step S102). Furthermore, the second score calculation unit 122 in the verification unit 120 calculates the second score indicating the degree at which the query feature quantity does not match the target feature quantity (step S103). The first score calculated by the first score calculation unit 121 and the second score calculated by the second score calculation unit 122 are both outputted to the map generation unit 130.

Subsequently, the map generation unit 130 generates the saliency map by treating the first score calculated by the first score calculation unit 121 as the first-class score and treating the second score calculated by the second score calculation unit 122 as the second-class score (step S104). Then, the map generation unit 130 outputs the generated saliency map (step S105). The saliency map may be outputted by the output apparatus 16 described above (see FIG. 1) or the like, for example. For example, the satellite map may be image-displayed by using a display. A specific visualization method of visualizing the saliency map will be described in detail in another example embodiment later.

(Technical Effect)

Next, a technical effect obtained by the information processing apparatus 10 according to the first example embodiment will be described.

As described in FIG. 1 to FIG. 3, in the information processing apparatus 10 according to the first example embodiment, the saliency map is generated by treating the matching score in the authentication processing as the class score. In this way, it is possible to regard and process the authentication task whose class is not defined in advance, as the class separation task, and it is thus possible to properly generate the saliency map.

<Second Example Embodiment>

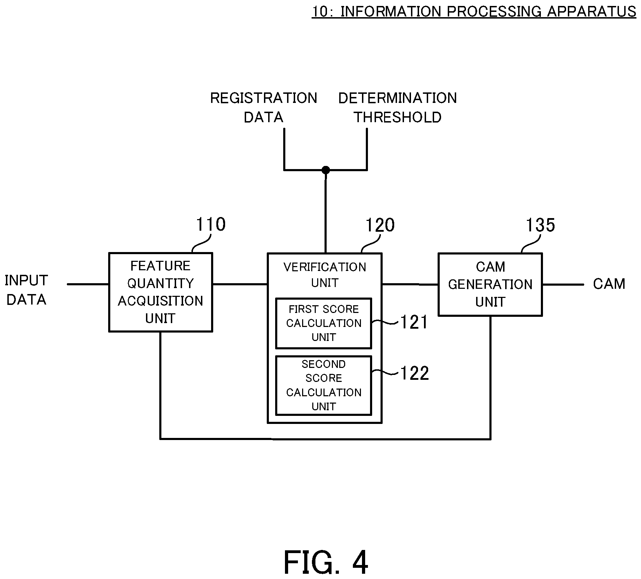

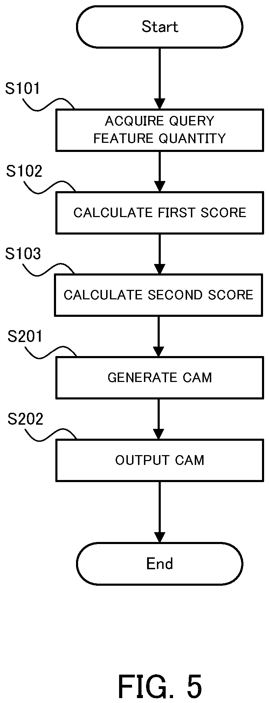

The information processing apparatus 10 according to a second example embodiment will be described with reference to FIG. 4 and FIG. 5. The second example embodiment is partially different from of the first example embodiment only in the configuration and operation, and may be the same as the first example embodiment in the other parts. For this reason, a part that is different from the first example embodiment will be described in detail below, and a description of the other overlapping parts will be omitted as appropriate.

(Functional Configuration)

First, with reference to FIG. 4, a functional configuration of the information processing apparatus 10 according to the second example embodiment will be described. FIG. 4 is a block diagram illustrating the functional configuration of the information processing apparatus according to the second example embodiment. In FIG. 4, the same components as those illustrated in FIG. 2 carry the same reference numerals.

As illustrated in FIG. 4, the information processing apparatus 10 according to the second example embodiment includes, as components for realizing the functions thereof, the feature quantity generation unit 110, the verification unit 120, and a CAM generation unit 135. That is, the information processing apparatus 10 according to the second example embodiment includes the CAM generation unit 135 instead of the map generation unit 130 according to the first example embodiment (see FIG. 2). The CAM generation unit 135 may be a processing block realized or implemented by the processor 11 (see FIG. 1), for example.

The CAM generation unit 135 is configured to generate a CAM (Class Activation Map) that is a specific example of the saliency map. As in the map generation unit 130 in the first example embodiment (see FIG. 2) described above, the CAM generation unit 135 treats the first score calculated by the first score calculation unit 121 as the first-class score and treats the second score calculated by the second score calculation unit 122 as the second-class score. In this way, the CAM generation unit 135 generates the CAM from the first score and the second score.

Since a specific method of generating the CAM employs existing techniques/technologies as appropriate, a detailed description thereof will be omitted here. The CAM generation unit 135 may use various techniques/methods derived from the CAM. For example, the CAM generation unit 135 may generate the CAM by using a technique of Grad-CAM (Gradient-weighted Class Activation Map). In this instance, for example, by regarding the t-th target feature quantity as a weight $W^c$ of Grad-CAM, the matching score may be treated as the class score.

(Flow of Operation)

Next, with reference to FIG. 5, a flow of operation of the information processing apparatus 10 according to the second example embodiment will be described. FIG. 5 is a flowchart illustrating the flow of the operation of the information processing apparatus according to the second example embodiment. In FIG. 5, the same steps as those illustrated in FIG. 3 carry the same reference numerals.

As illustrated in FIG. 5, when the operation by the information processing apparatus 10 according to the second example embodiment is started, first, the feature quantity acquisition unit 110 acquires the query feature quantity regarding the target of the authentication processing (step S101). Subsequently, the first score calculation unit 121 in the verification unit 120 calculates the first score indicating the degree at which the query feature quantity matches the target feature quantity (step S 102). Furthermore, the second score calculation unit 122 in the verification unit 120 calculates the second score indicating the degree at which the query feature quantity does not match the target feature quantity (step S103).

Subsequently, the CAM generation unit 135 generates the CAM by treating the first score calculated by the first score calculation unit 121 as the first-class score and treating the second score calculated by the second score calculation unit 122 as the second-class score (step S201). Then, the CAM generation unit 135 outputs the generated CAM (step S202). The CAM may be outputted by the output apparatus 16 described above (see FIG. 1) or the like, for example. For example, the CAM may be image-displayed image by using a display. A specific visualization method of visualizing the CAM will be described in detail in another example embodiment later.

(Technical Effect)

Next, a technical effect obtained by the information processing apparatus 10 according to the second example embodiment will be described.

As described in FIG. 4 and FIG. 5, in the information processing apparatus 10 according to the second example embodiment, the CAM is generated by treating the matching score in the authentication processing as the class score. In this way, it is possible to regard and process the authentication task whose class is not defined in advance, as the class separation task, and it is thus possible to properly generate the CAM.

<Third Example Embodiment>

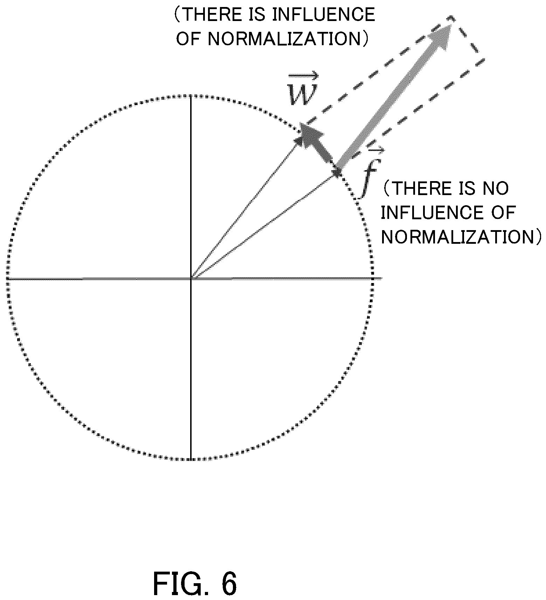

The information processing apparatus 10 according to a third example embodiment will be described with reference to FIG. 6 to FIG. 8. The third example embodiment is partially different from the first and second example embodiments only in the configuration and operation, and may be the same as the first and second example embodiments in the other parts. For this reason, a part that is different from each of the example embodiments described above will be described in detail below, and a description of the other overlapping parts will be omitted as appropriate.

(Influence of Normalization Processing)

First, with reference to FIG. 6, an influence of normalization processing performed in the information processing apparatus 10 according to the third example embodiment will be described. FIG. 6 is a schematic diagram illustrating the influence of the normalization processing in gradient calculation.

The authentication processing may include the normalization processing. For example, the normalization processing may include processing of normalizing the query feature quantity and the target feature quantity. A specific example of the normalization processing is processing of normalizing a feature quantity map $F_{ij}^k$ (where i and j indicate elements of the map) as in the following equations (4) and (5). The normalization processing according to the present example embodiment is not limited to the example below.

[Equation 3]

$$f^k = \sum\nolimits_{ij} F_{ij}^k \cdots (4)$$

$$\hat{f}^k = \frac{f^k}{\sqrt{\sum_k (f^k)^2}} \cdots (5)$$

Then, the gradient calculation for the normalization processing is as illustrated in the following equation (6).
[Equation 4]

$$\frac{\partial \hat{f}^m}{\partial f^n} = \frac{1}{\sqrt{\sum_k (f^k)^2}} \left( \delta_{mn} - \hat{f}^m \hat{f}^{mn} \right) \cdots (6)$$

where δ is the Kronecker delta.

The first term in the above equation (6) corresponds to f in FIG. 6, and does not include any influence of the normalization processing. On the other hand, in a case where the second term is included, it corresponds to w in FIG. 6 and includes the influence of the normalization processing. As described above, a vector has a completely different direction between the term including the influence of the normalization processing and the term excluding the influence.

The first term excluding the influence of the normalization processing is easy for humans to understand intuitively. On the other hand, the second term including the influence of the normalization processing, is easy for machines to understand, but is hard for humans to understand intuitively. Therefore, when the saliency map is generated while the influence of the normalization processing is included, an obtained result may be unsuitable for the human intuitive understanding. The information processing apparatus 10 according to the present example embodiment is allowed to generate an appropriate saliency map by eliminating the influence of the normalization processing (specifically, by eliminating the influence of the second term of the above equation (6)).

(Functional Configuration)

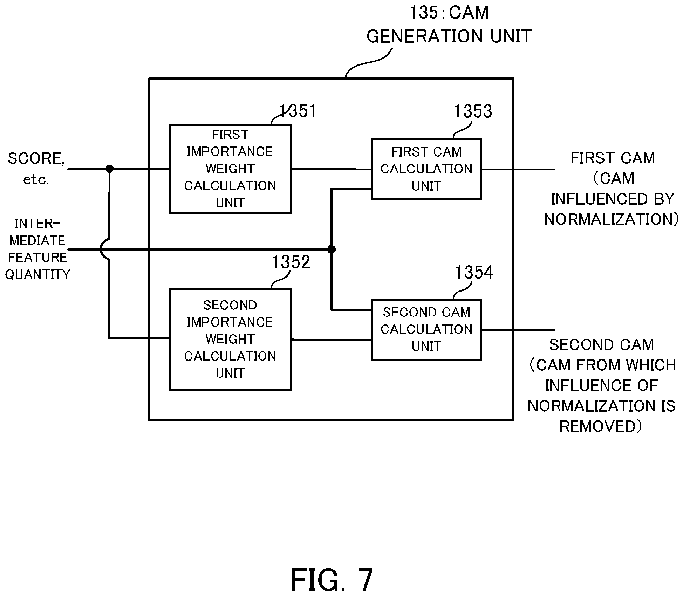

Next, with reference to FIG. 7, a functional configuration of the information processing apparatus 10 according to the third example embodiment (especially, a configuration of the CAM generation unit 135) will be described. FIG. 7 is a block diagram illustrating the functional configuration of the CAM generation unit in the information processing apparatus according to the third example embodiment.

As illustrated in FIG. 7, the CAM generation unit 135 according to the second example embodiment includes, as components for realizing the functions thereof, a first importance weight calculation unit 1351, a second importance weight calculation unit 1352, a first CAM calculation unit 1353, and a second CAM calculation unit 1354.

The first importance weight calculation unit 1351 is configured to be calculate an importance weight influenced by the normalization processing. On the other hand, the second importance weight calculation unit 1352 is configured to calculate an importance weight from which the influence of the normalization processing is eliminated. The matching score, a matching feature quantity, other pieces of information used for the gradient calculation, and the like are inputted to the first importance weight calculation unit 1351 and the second importance weight calculation unit 1352. Then, the first importance weight calculation unit 1351 and the second importance weight calculation unit 1352 respectively calculate the importance weights, by using the pieces of information inputted therein.

The first CAM calculation unit 1353 generates a first CAM by using the importance weight calculated by the first importance weight calculation unit 1351 (i.e., the importance weight influenced by the normalization processing), the intermediate feature quantity, or the like. The first CAM is a CAM influenced by the normalization processing. On the other hand, the second CAM calculation unit 1354 generates a second CAM by using the importance weight calculated by the second importance weight calculation unit 1352 (i.e., the importance weight from which the influence of the normalization processing is eliminated), the intermediate feature quantity, or the like. The second CAM is a CAM from which the influence of the normalization processing is eliminated.

(Flow of Operation)

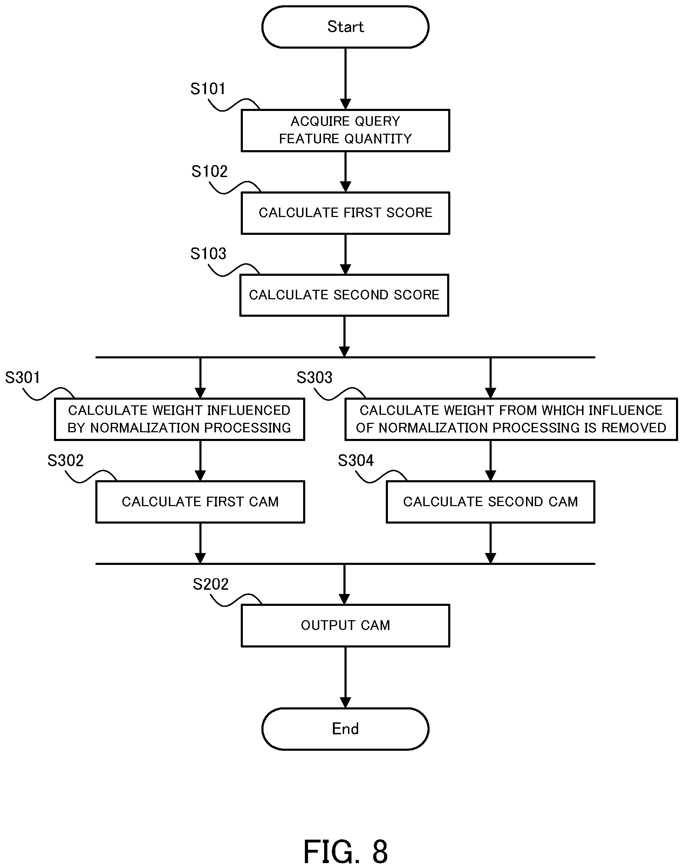

Next, with reference to FIG. 8, a flow of operation of the information processing apparatus 10 according to the third example embodiment will be described. FIG. 8 is a flowchart illustrating the flow of the operation of the information processing apparatus according to the third example embodiment. In FIG. 8, the same steps as those illustrated in FIG. 5 carry the same reference numerals.

As illustrated in FIG. 8, when the operation by the information processing apparatus 10 according to the third example embodiment is started, first, the feature quantity acquisition unit 110 acquires the query feature quantity regarding the target of the authentication processing (step S101). Subsequently, the first score calculation unit 121 in the verification unit 120 calculates the first score indicating the degree at which the query feature quantity matches the target feature quantity (step S102). Furthermore, the second score calculation unit 122 in the verification unit 120 calculates the second score indicating the degree at which the query feature quantity does not match the target feature quantity (step S103).

Subsequently, the first importance weight calculation unit 1351 calculates the importance weight influenced by the normalization processing (step S301). Then, the first CAM calculation unit 1353 generates the first CAM influenced by the normalization processing, by using the importance weight calculated by the first importance weight calculation unit 1351, the intermediate feature quantity, or the like (step S302). On the other hand, the second importance weight calculation unit 1352 calculates the importance weight from which the influence of the normalization processing is eliminated (step S303). The second CAM calculation unit 1354 generate the second CAM from which the influence of the normalization processing is eliminated, by using the importance weight calculated by the second importance weight calculation unit 1352, the intermediate feature quantity, or the like (step S304).

Subsequently, the CAM generation unit 135 outputs the generated CAM (step S202). The CAM generation unit 135 may output both the first CAM influenced by the normalization processing and the second CAM uninfluenced by the normalization processing, or may output one of the first the first CAM and the second CAM. A specific visualization method of visualizing the first CAM and the second CAM will be described in detail in another example embodiment later.

(Technical Effect)

Next, a technical effect obtained by the information processing apparatus 10 according to the third example embodiment will be described.

As described in FIG. 6 to FIG. 8, in the information processing apparatus 10 according to the third example embodiment, the CAM from which the influence of the normalization processing is eliminated, is generated. In this way, it is possible to generate the CAM that matches the human intuitive understanding. The present example embodiment describes an example of generating the CAM, but an effect obtained by eliminating the normalization processing, may be also obtained from the saliency map other than the CAM.

<Fourth Example Embodiment>

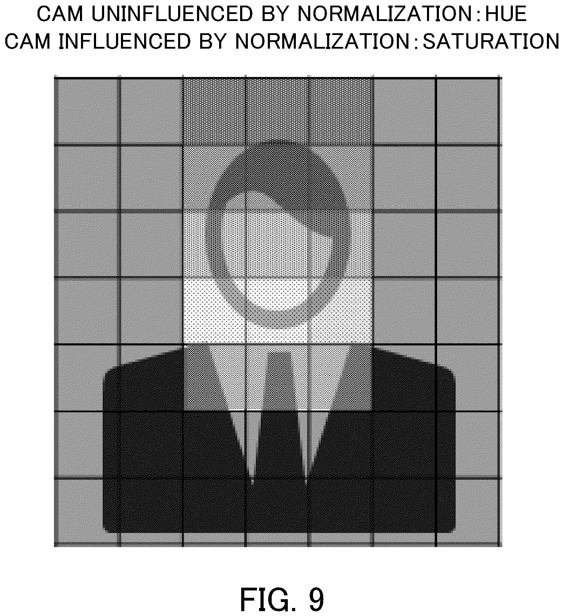

The information processing apparatus 10 according to a fourth example embodiment will be described with reference to FIG. 9. The fourth example embodiment describes a visualization method of visualizing the map in the third example embodiment, and may be the same as the third example embodiment in the apparatus configuration, flow of operation, and the like. For this reason, a part that is different from each of the example embodiments described above will be described in detail below, and a description of the other overlapping parts will be omitted as appropriate.

(Visualization Method)

First, with reference to FIG. 9, the visualization method of visualizing the saliency map by the information processing apparatus 10 according to the fourth example embodiment will be described. FIG. 9 is a conceptual diagram illustrating an example of the visualization method by the information processing apparatus according to the fourth example embodiment.

As illustrated in FIG. 9, in the information processing apparatus 10 according to the fourth example embodiment, visualization is performed in such a manner that the CAM uninfluenced by the normalization processing (i.e., the second CAM calculated by the second CAM calculation unit 1354) and the CAM influenced by the normalization processing (i.e., the first CAM calculated by the first CAM calculation unit 1353) are associated with different parameters regarding display. For example, visualization is performed such that the second CAM uninfluenced by the normalization processing corresponds to hue and the first CAM influenced by the normalization processing corresponds to saturation. In this way, it is possible to overlay and display the first CAM and the second CAM on an input image (black and white image), by associating an input with brightness, for example.

The parameters with which the first CAM and the second CAM are associated, are not limited to the hue and saturation described above. It is preferable, however, that the first CAM uninfluenced by the normalization processing is associated with a parameter having a stronger visual effect on humans (e.g., hue in the above example), than that in the second CAM.

(Technical Effect)

Next, a technical effect obtained by the information processing apparatus 10 according to the fourth example embodiment will be described.

As described in FIG. 9, in the information processing apparatus 10 according to the fourth example embodiment, visualization is performed such that the CAM uninfluenced by the normalization processing and the CAM influenced by the normalization processing correspond to different parameters. In this way, it is possible to realize the visualization that matches the human intuitive understanding.

<Fifth Example Embodiment>

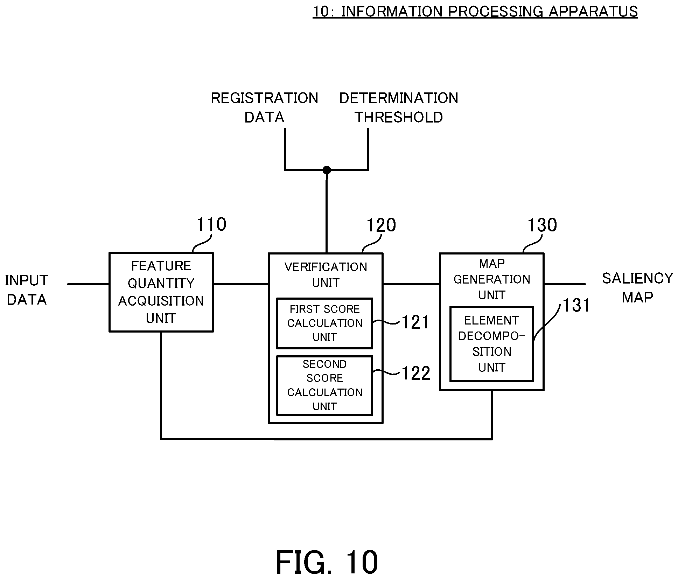

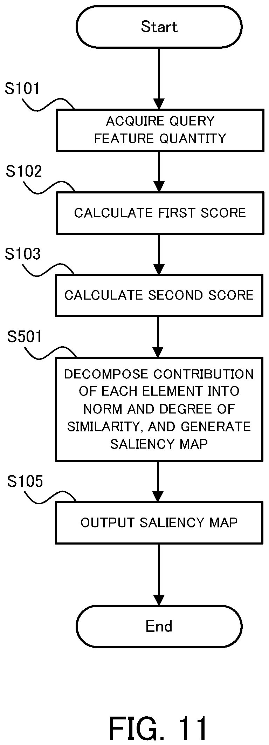

The information processing apparatus 10 according to a fifth example embodiment will be described with reference to FIG. 10 and FIG. 11. The fifth example embodiment is partially different from the first to fourth example embodiments only in the configuration and operation, and may be the same as the first to fourth example embodiments in the other parts. For this reason, a part that is different from each of the example embodiments described above will be described in detail below, and a description of the other overlapping parts will be omitted as appropriate.

(Functional Configuration)

First, with reference to FIG. 10, a functional configuration of the information processing apparatus 10 according to the fifth example embodiment will be described. FIG. 10 is a block diagram illustrating the functional configuration of the information processing apparatus according to the fifth example embodiment. In FIG. 10, the same components as those illustrated in FIG. 2 carry the same reference numerals.

As illustrated in FIG. 10, the information processing apparatus 10 according to the fifth example embodiment includes, as components for realizing the functions thereof, the feature quantity acquisition unit 110, the verification unit 120, and the map generation unit 130. Especially, the map generation unit 130 according to the fifth example embodiment includes an element decomposition unit 131.

The element decomposition unit 131 is configured to decompose a contribution of each element of the feature quantity map based on the query feature quantity to the authentication processing, into a norm and a degree of similarity. The element decomposition unit 131, however, premises that processing after the generation of the feature quantity map is almost linear processing. The term "almost" is used herein because an assumed case is where definition-extension is obvious, such as biased processing included in affine transformation. An example of nonlinear processing is activation function processing such as ReLU.

Given the above-mentioned the premise of linear processing, a normalized feature quantity may be expressed by the following equation (7).
[Equation 5]

$$\hat{f}^k = \sum_{ij} G_{ij}^k = \frac{1}{\sqrt{\sum_k (f^k)^2}} \sum_{ij} \widetilde{G}_{ij}^k \cdots (7)$$

where $G_{ij}$ is the feature quantity defined by each of the elements i and j.

The normalization processing is the nonlinear processing, but it can be defined as the linear processing by calculating a normalization factor in advance as in the above equation (7). Then, when the matching score is reviewed with the above equation (7) in mind, the contribution of each element may be defined into the norm and an angle (the degree of similarity), as in the following equation (8).
[Equation 6]

$$y^t = \vec{\hat{f}} \cdot \vec{\hat{f}}_t = \sum_{ij} \vec{G}_{ij} \cdot \vec{\hat{f}}_t = \sum_{ij} |\vec{G}_{ij}| y_{ij}^t \cdots (8)$$

where $|G_{ij}|$ is the norm of $G_{ij}$ and $y_{ij}^t$ is cosine similarity of $G_{ij}$ and ft.

In the above configuration, a weighted sum of the degree of similarity is utilized. The degree of similarity is an index often used in face recognition or the like, for example. In the present example embodiment, the saliency map is generated in view of such properties of the authentication processing.

(Flow of Operation)

Referring now to FIG. 11, a flow of operation of the information processing apparatus 10 according to the fifth example embodiment will be described. FIG. 11 is a flowchart illustrating the flow of the operation of the information processing apparatus according to the fifth example embodiment. In FIG. 11, the same steps as those illustrated in FIG. 3 carry the same reference numerals.

As illustrated in FIG. 11, when the operation by the information processing apparatus 10 according to the fifth example embodiment is started, first, the feature quantity acquisition unit 110 acquires the query feature quantity regarding the target of the authentication processing (step S101). Subsequently, the first score calculation unit 121 in the verification unit 120 calculates the first score indicating the degree at which the query feature quantity matches the target feature quantity (step S102). Furthermore, the second score calculation unit 122 in the verification unit 120 calculates the second score indicating the degree at which the query feature quantity does not match the target feature quantity (step S103).

Subsequently, the map generation unit 130 generates the saliency map by decomposing the contribution of each element of the feature quantity map, into the norm and the degree of similarity (step S501). Then, the map generation unit 130 outputs the generated saliency map (step S202). A specific visualization method using the norm and degree of similarity into which the contribution is decomposed, will be described in detail in another example embodiment later.

(Technical Effect)

Next, a technical effect obtained by the information processing apparatus 10 according to the fifth example embodiment will be described.

As described in FIG. 10 and FIG. 11, in the information processing apparatus 10 according to the fifth example embodiment, the contribution of each element of the feature quantity map is decomposed into the norm and the degree of similarity. In this way, it is possible to generate an appropriate saliency map in view of the properties of the authentication processing based on the premise of the normalization processing.

<Sixth Example Embodiment>

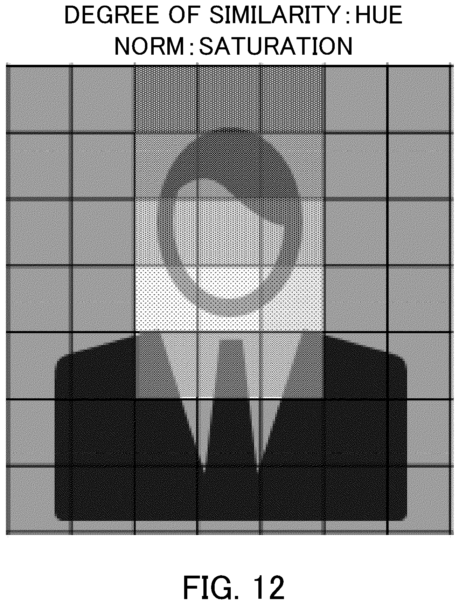

With reference to FIG. 12, the information processing apparatus 10 according to a sixth example embodiment will be described. The sixth example embodiment describes a visualization method of visualizing the map in the fifth example embodiment, and may be the same as the fifth example embodiment in the apparatus configuration, flow of operation, and the like. For this reason, a part that is different from each of the example embodiments described above will be described in detail below, and a description of the other overlapping parts will be omitted as appropriate.

(Visualization Method)

First, with reference to FIG. 12, the visualization method of visualizing the saliency map by the information processing apparatus 10 according to the sixth example embodiment will be described. FIG. 12 is a conceptual diagram illustrating an example of the visualization method by the information processing apparatus according to the sixth example embodiment.

As illustrated in FIG. 12, in the information processing apparatus 10 according to the sixth example embodiment, visualization is performed in such a manner that the norm and the degree of similarity, into which the contribution is decomposed by the element decomposition unit 131, are associated with different parameters regarding display. For example, visualization is performed such that the norm corresponds to saturation and the degree of similarity corresponds to hue. In this way, it is possible to overlay and display elements corresponding to the norm and the degree of similarity on the input image (black and white image), by associating an input with brightness, for example.

The parameters with which the norm and the degree of similarity are associated, are not limited to the hue and saturation described above. It is preferable, however, that the degree of similarity that is considered to be relatively highly important, is associated with a parameter having a stronger visual effect on humans (e.g., hue in the above example), than that in the norm.

(Technical Effect)

Next, a technical effect obtained by the information processing apparatus 10 according to the sixth example embodiment will be described.

As described in FIG. 12, in the information processing apparatus 10 according to the sixth example embodiment, visualization is performed such that the norm and the degree of similarity into which the contribution is decomposed, correspond to different parameters. In this way, it is possible to realize the visualization that takes into account the properties of the authentication processing.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal.

<Supplementary Notes>

The example embodiments described above may be further described as, but not limited to, the following Supplementary Notes below.

(Supplementary Note 1)

An information processing apparatus according to Supplementary Note 1 is an information processing apparatus including: a feature quantity acquisition unit that acquires a query feature quantity regarding a target of authentication processing; a first score calculation unit that calculates a first score indicating a degree at which the query feature quantity matches a target feature quantity registered in advance; a second score calculation unit that calculates a second score indicating a degree at which the query feature quantity does not match the target feature quantity, on the basis of the first score; and a map generation unit that generates a saliency map regarding the authentication processing by treating the first score as a first-class score corresponding to a first class and treating the second score as a second-class score corresponding to a second class.

(Supplementary Note 2)

An information processing apparatus according to Supplementary Note 2 is the information processing apparatus according to Supplementary Note 1, wherein the map generation unit generates a CAM (Class Activation Map).

(Supplementary Note 3)

An information processing apparatus according to Supplementary Note 3 is the information processing apparatus according to Supplementary Note 1 or 2, wherein the map generation unit eliminates an influence by normalization processing of the query feature quantity included in the authentication processing, and generates the saliency map.

(Supplementary Note 4)

An information processing apparatus according to Supplementary Note 4 is the information processing apparatus according to Supplementary Note 3, wherein the map generation unit generates the saliency map in such a manner that first data excluding the influence by the normalization processing is associated with a first parameter and that second data including the influence by the normalization processing is associated with a second parameter.

(Supplementary Note 5)

An information processing apparatus according to Supplementary Note 5 is the information processing apparatus according to Supplementary Note 1 or 2, wherein the map generation unit decomposes a contribution of each element of a feature quantity map based on the query feature quantity, to the authentication processing, into two elements that are a norm and a degree of similarity, and generates the saliency map.

(Supplementary Note 6)

An information processing apparatus according to Supplementary Note 6 is the information processing apparatus according to Supplementary Note 5, wherein the map generation unit generates the saliency map in such a manner that the norm is associated with a first parameter and that the degree of similarity is associated with a second parameter.

(Supplementary Note 7)

An information processing method according to Supplementary Note 7 is an information processing method that is executed by at least one computer, the information processing method including: acquiring a query feature quantity regarding a target of authentication processing; calculating a first score indicating a degree at which the query feature quantity matches a target feature quantity registered in advance; calculating a second score indicating a degree at which the query feature quantity does not match the target feature quantity, on the basis of the first score; and generating a saliency map regarding the authentication processing by treating the first score as a first-class score corresponding to a first class and treating the second score as a second-class score corresponding to a second class.

(Supplementary Note 8)

A recording medium according to Supplementary Note 8 is a recording medium on which a computer program that allows at least one computer to execute an information processing method is recorded, the information processing method including: acquiring a query feature quantity regarding a target of authentication processing; calculating a first score indicating a degree at which the query feature quantity matches a target feature quantity registered in advance; calculating a second score indicating a degree at which the query feature quantity does not match the target feature quantity, on the basis of the first score; and generating a saliency map regarding the authentication processing by treating the first score as a first-class score corresponding to a first class and treating the second score as a second-class score corresponding to a second class.

(Supplementary Note 9)

A computer program according to Supplementary Note 9 is a computer program that allows at least one computer to execute an information processing method, the information processing method including: acquiring a query feature quantity regarding a target of authentication processing; calculating a first score indicating a degree at which the query feature quantity matches a target feature quantity registered in advance; calculating a second score indicating a degree at which the query feature quantity does not match the target feature quantity, on the basis of the first score; and generating a saliency map regarding the authentication processing by treating the first score as a first-class score corresponding to a first class and treating the second score as a second-class score corresponding to a second class.

(Supplementary Note 10)

An information processing system according to Supplementary Note 10 is an information processing apparatus including: a feature quantity acquisition unit that acquires a query feature quantity regarding a target of authentication processing; a first score calculation unit that calculates a first score indicating a degree at which the query feature quantity matches a target feature quantity registered in advance; a second score calculation unit that calculates a second score indicating a degree at which the query feature quantity does not match the target feature quantity, on the basis of the first score; and a map generation unit that generates a saliency map regarding the authentication processing by treating the first score as a first-class score corresponding to a first class and treating the second score as a second-class score corresponding to a second class.

This disclosure is allowed to be changed, if desired, without departing from the essence or spirit of this disclosure which can be read from the claims and the entire specification. An information processing apparatus, an information processing method, and a recording medium with such changes are also intended to be within the technical scope of this disclosure.

Description of Reference Codes

10 Information processing apparatus
11 Processor
16 Output apparatus
110 Feature quantity acquisition unit
120 Verification unit
121 First score calculation unit
122 Second score calculation unit
130 Map generation unit
131 Element decomposition unit
135 CAM generation unit
1351 First importance weight calculation unit
1352 Second importance weight calculation unit
1353 First CAM calculation unit
1354 Second CAM calculation unit

**Claims**

1. An information processing apparatus comprising:

   a feature quantity acquisition unit that acquires a query feature quantity regarding a target of authentication processing;
   a first score calculation unit that calculates a first score indicating a degree at which the query feature quantity matches a target feature quantity registered in advance;
   a second score calculation unit that calculates a second score indicating a degree at which the query feature quantity does not match the target feature quantity, on the basis of the first score; and
   a map generation unit that generates a saliency map regarding the authentication processing by treating the first score as a first-class score corresponding to a first class and treating the second score as a second-class score corresponding to a second class.

2. The information processing apparatus according to claim 1, wherein the map generation unit generates a CAM (Class Activation Map).

3. The information processing apparatus according to claim 1 or 2, wherein the map generation unit eliminates an influence by normalization processing of the query feature quantity included in the authentication processing, and generates the saliency map.

4. The information processing apparatus according to claim 3, wherein the map generation unit generates the saliency map in such a manner that first data excluding the influence by the normalization processing is associated with a first parameter and that second data including the influence by the normalization processing is associated with a second parameter.

5. The information processing apparatus according to claim 1 or 2, wherein the map generation unit decomposes a contribution of each element of a feature quantity map based on the query feature quantity, to the authentication processing, into two elements that are a norm and a degree of similarity, and generates the saliency map.

6. The information processing apparatus according to claim 5, wherein the map generation unit generates the saliency map in such a manner that the norm is associated with a first parameter and that the degree of similarity is associated with a second parameter.

7. An information processing method that is executed by at least one computer, the information processing method comprising:

   acquiring a query feature quantity regarding a target of authentication processing;
   calculating a first score indicating a degree at which the query feature quantity matches a target feature quantity registered in advance;
   calculating a second score indicating a degree at which the query feature quantity does not match the target feature quantity, on the basis of the first score; and
   generating a saliency map regarding the authentication processing by treating the first score as a first-class score corresponding to a first class and treating the second score as a second-class score corresponding to a second class.

8. A recording medium on which a computer program that allows at least one computer to execute an information processing method is recorded, the information processing method including:

   acquiring a query feature quantity regarding a target of authentication processing;
   calculating a first score indicating a degree at which the query feature quantity matches a target feature quantity registered in advance;
   calculating a second score indicating a degree at which the query feature quantity does not match the target feature quantity, on the basis of the first score; and
   generating a saliency map regarding the authentication processing by treating the first score as a first-class score corresponding to a first class and treating the second score as a second-class score corresponding to a second class.

FIG. 1

10: INFORMATION PROCESSING APPARATUS

REGISTRATION DATA   DETERMINATION THRESHOLD

110   120   130

INPUT DATA → FEATURE QUANTITY ACQUISITION UNIT → VERIFICATION UNIT

FIRST SCORE CALCULATION UNIT ~121

SECOND SCORE CALCULATION UNIT ~122

MAP GENERATION UNIT → SALIENCY MAP

FIG. 2

Start

S101 → ACQUIRE QUERY
FEATURE QUANTITY

S102 → CALCULATE FIRST SCORE

S103 → CALCULATE SECOND SCORE

S104 → GENERATE SALIENCY MAP

S105 → OUTPUT SALIENCY MAP

End

FIG. 3

10: INFORMATION PROCESSING APPARATUS

REGISTRATION DATA     DETERMINATION THRESHOLD

110     120     135

INPUT DATA — | FEATURE QUANTITY ACQUISITION UNIT | — | VERIFICATION UNIT<br>FIRST SCORE CALCULATION UNIT ~121<br>SECOND SCORE CALCULATION UNIT ~122 | — | CAM GENERATION UNIT | — CAM

# FIG. 4

Start

S101 → ACQUIRE QUERY
FEATURE QUANTITY

S102 → CALCULATE FIRST SCORE

S103 → CALCULATE SECOND SCORE

S201 → GENERATE CAM

S202 → OUTPUT CAM

End

FIG. 5

(THERE IS INFLUENCE
OF NORMALIZATION)

$\overrightarrow{w}$

$\overrightarrow{f}$

(THERE IS NO
INFLUENCE OF
NORMALIZATION)

FIG. 6

135 : CAM
GENERATION UNIT

SCORE,
etc.

INTER-
MEDIATE
FEATURE
QUANTITY

1351
FIRST
IMPORTANCE
WEIGHT
CALCULATION
UNIT

1353
FIRST CAM
CALCULATION
UNIT

FIRST CAM
(CAM
INFLUENCED BY
NORMALIZATION)

1352
SECOND
IMPORTANCE
WEIGHT
CALCULATION
UNIT

1354
SECOND CAM
CALCULATION
UNIT

SECOND CAM
(CAM FROM WHICH
INFLUENCE OF
NORMALIZATION IS
REMOVED)

FIG. 7

FIG. 8

CAM UNINFLUENCED BY NORMALIZATION：HUE
CAM INFLUENCED BY NORMALIZATION：SATURATION

FIG. 9

10: INFORMATION PROCESSING APPARATUS

REGISTRATION DATA · DETERMINATION THRESHOLD

110 · 120 · 130

INPUT DATA → FEATURE QUANTITY ACQUISITION UNIT → VERIFICATION UNIT → MAP GENERATION UNIT → SALIENCY MAP

FIRST SCORE CALCULATION UNIT — 121

ELEMENT DECOMPO-SITION UNIT — 131

SECOND SCORE CALCULATION UNIT — 122

FIG. 10

Start

S101 ACQUIRE QUERY
FEATURE QUANTITY

S102 CALCULATE FIRST SCORE

S103 CALCULATE SECOND SCORE

S501 DECOMPOSE CONTRIBUTION
OF EACH ELEMENT INTO
NORM AND DEGREE OF
SIMILARITY, AND GENERATE
SALIENCY MAP

S105 OUTPUT SALIENCY MAP

End

FIG. 11

DEGREE OF SIMILARITY : HUE
NORM : SATURATION

FIG. 12

## INTERNATIONAL SEARCH REPORT

| International application No. |
|---|
| **PCT/JP2022/011958** |

### A. CLASSIFICATION OF SUBJECT MATTER

**G06F 21/31**(2013.01)i
FI: G06F21/31

According to International Patent Classification (IPC) or to both national classification and IPC

### B. FIELDS SEARCHED

Minimum documentation searched (classification system followed by classification symbols)

G06F21/31

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/115154 A1 (YOTI HOLDING LTD.) 11 June 2020 (2020-06-11) p. 34, line 10 to p. 35, line 10, fig. 13 | 1-8 |
| A | JP 2020-042765 A (PANASONIC INTELLECTUAL PROPERTY CORPORATION OF AMERICA) 19 March 2020 (2020-03-19) paragraphs [0014]-[0023], fig. 5, 6 | 1-8 |
| A | JP 2021-128409 A (CANON KABUSHIKI KAISHA) 02 September 2021 (2021-09-02) paragraph [0016] | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/011958**

| Patent document cited in search report | | | Publication date (day/month/year) | Patent family member(s) | | | Publication date (day/month/year) |
|---|---|---|---|---|---|---|---|
| WO | 2020/115154 | A1 | 11 June 2020 | US | 2021/0082136 | A1 | |
| JP | 2020-042765 | A | 19 March 2020 | US | 2020/0242398 | A1 | |
| | | | | paragraphs [0034]-[0043], fig. 5, 6 | | | |
| | | | | CN | 111213180 | A | |
| JP | 2021-128409 | A | 02 September 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021089512 A
- JP 2019211913 A
- JP 2012084117 A